# EUROPÄISCHE PATENTSCHRIFT

(11) **EP 3 172 930 B1**
(45) Veröffentlichungstag und Bekanntmachung des Hinweises auf die Patenterteilung: **06.06.2018**
(21) Anmeldenummer: 15714482.5
(22) Anmeldetag: 01.04.2015
(51) Int. Cl.: H04W 72/12

(54) **KOEXISTENZMANAGEMENT VON BLUETOOTH MIT WLAN**
MANAGEMENT OF BLUETOOTH AND WLAN COEXISTENCE
ADMINISTRATION DE LA COEXISTENCE DE BLUETOOTH ET WLAN

(30) Priorität: 23.07.2014 DE 102014214422
(43) Veröffentlichungstag der Anmeldung: 31.05.2017
(73) Patentinhaber: Bayerische Motoren Werke Aktiengesellschaft, 80809 München (DE)
(72) Erfinder: AREND, Martin, 81247 Muenchen (DE); KELLERMANN, Helmut, 85764 Oberschleissheim (DE)
(86) Internationale Anmeldenummer: PCT/EP2015/057222
(87) Internationale Veröffentlichungsnummer: WO 2016/012109

(56) Entgegenhaltungen:
- EP-A2- 2 605 553
- US-A1- 2008 310 332
- US-A1- 2014 119 252
- BALASUNDARAM SUBBUSUNDARAM ET AL: "System Implementation of Pushing DATA to Handheld Devices via Bluetooth High Speed Specification, Version 3.0 + HS", WIRELESS COMMUNICATIONS NETWORKING AND MOBILE COMPUTING (WICOM), 2010 6TH INTERNATIONAL CONFERENCE ON, IEEE, PISCATAWAY, NJ, USA, 23. September 2010 (2010-09-23), Seiten 1-4, XP031828420, ISBN: 978-1-4244-3708-5
- JOHN R BARR ET AL: "Bluetooth SIG Liaison Report ; 15-10-0329-00-0000-bluetooth-sig-liaison-r eport", IEEE DRAFT; 15-10-0329-00-0000-BLUETOOTH-SIG-LIAISON-R EPORT, IEEE-SA MENTOR, PISCATAWAY, NJ USA, Bd. 802.15WG, 18. Mai 2010 (2010-05-18), Seiten 1-8, XP017665687, [gefunden am 2010-05-18]

## Beschreibung

Die vorliegende Erfindung betrifft ein Verfahren zum Aufbauen und Betreiben einer mehrfachen Kommunikationsverbindung in einer drahtlosen Kommunikationsvorrichtung, eine diesbezügliche Kommunikationsvorrichtung und ein diesbezüglich eingerichtetes Kraftfahrzeug.

Bluetooth 3.0 + HS, ist eine Weiterentwicklung von Bluetooth 2.1, wobei das HS für High-Speed steht. Für hohe Datenübertragungsraten kann ein zusätzlicher WLAN Übertragungskanal aufgebaut werden. Bluetooth (BT) 2.1 überträgt seine Daten über schmalbandige Kanäle im ISM-Band bei 2,4 GHz. Hierzu wird das ISM-Band bei 2,4 GHz in 79 Kanäle aufgeteilt. Um Robustheit gegenüber Störern zu erhalten, wird die Frequenz 1600 mal pro Sekunde gewechselt, sogenanntes Frequency-Hopping. Im Weiteren wird dieser BT-Kanal als der ursprüngliche BT-Kanal bezeichnet. Somit kann mittels Bluetooth 3.0 + HS zusätzlich zum ursprünglichen BT-Kanal ein WLAN Kanal aufgebaut werden. Im Weiteren wird dieser WLAN-Kanal auch als BT-WLAN-Kanal bezeichnet. Somit ist BT-WLAN eine WLAN Verbindung, die bei Highspeed Anforderungen an eine BT-Verbindung aufgebaut wird, vergleichbar einem Bluetooth 3.0 + HS Standard oder höher.

EP 2 605 553 A2 offenbart dabei, dass eine BT 3.0 + HS Steuereinheit in BT 3.0 + HS kommuniziert. Eine WiFi-Steuereinheit führt eine WiFi-Kommunikation durch. Eine NFC-Kommunikationseinheit führt eine NFC-Kommunikation durch. Wenn sich eine andere Informationsverarbeitungsendgerätevorrichtung nähert, bewirkt eine Handover-Steuereinheit, dass die NFC-Kommunikationseinheit eine NFC-Kommunikation mit der Informationsverarbeitungsendgerätevorrichtung durchführt und die Kommunikation mit der Informationsverarbeitungsendgerätevorrichtung von der NFC-Kommunikation zu der BT 3.0 + HS Kommunikation und/oder der WiFi-Kommunikation wechselt, basierend auf der gesendeten und empfangenen Einstellungsinformationen. Eine Kommunikationssteuereinheit bestimmt, ob eine HS-Verbindung verwendet wird oder nicht, basierend auf Eingangsinformationen zur Datenkommunikation und steuert die Handover-Steuereinheit, um nicht zu einer WiFi-Kommunikation zu wechseln, wenn eine HS-Verbindung verwendet wird.

Der "May 2010 Bluetooth SIG Liason Report" vom 20. Mai 2010 von John R. Barr, im "Project: IEEE P802.15 Working Group for Wireless Personal Area Networks (WPANs)" offenbart, dass eine Bluetooth-Kommunikationsverbindung zwischen zwei Smartphones aufgebaut wird. Soll nun auf Basis dieser Verbindung ein Bild übertragen werden, so wird parallel eine WLAN-Verbindung (IEEE 802.11) aufgebaut, um dieses Bild von dem einen Smartphone auf das andere Smartphone zu übertragen. Nach Abschluss der Übertragung, wird die WLAN-Verbindung wieder abgebaut und die beiden Smartphones bleiben weiterhin über Bluetooth miteinander verbunden.

Sobald BT 3.0 einen BT-WLAN Kanal aufbaut, ist derzeit keine separate und eigenständige WLAN Verbindung mit dem Gerät außerhalb BT 3.0 möglich, sofern nicht zweimal eine eigenständige WLAN Hardware verbaut ist. Eine zweite WLAN Hardware verursacht erhöhte Kosten. Ist hingegen nur eine eigenständige WLAN Hardware verbaut und soll damit eine
WLAN Verbindung aufgebaut werden, muss zunächst eine mittels BT 3.0 bestehende BT-WLAN Verbindung abgeworfen werden, beziehungsweise es kann mittels BT 3.0 keine BT-WLAN Verbindung aufgebaut werden, BT 3.0 kann somit nicht in den HS Modus wechseln. Das bedeutet, dass WLAN und Bluetooth 3.0 mit HS sich gegenseitig behindern, beziehungsweise ausschließen.

Daher wäre es wünschenswert, eine Möglichkeit bereitzustellen, welche zumindest einen der bekannten Nachteile des Standes der Technik vermeidet oder zumindest vermindert.

Es ist Ziel der Erfindung eine für den Nutzer noch komfortablere und schnellere Datenverbindung, insbesondere auch für die Nutzung in Kraftfahrzeugen vorzuschlagen, welche zumindest einen Teil der im Stand der Technik bekannten Nachteile vermeidet oder zumindest vermindert.

Die Aufgabe wird erfindungsgemäß gelöst, mittels eines Verfahrens nach dem Hauptanspruch, sowie mittels einer Vorrichtung nach einem nebengeordneten Anspruch und einem Kraftfahrzeug nach einem weiteren nebengeordneten Anspruch.

Der Gegenstand des Hauptanspruches betrifft dabei ein Verfahren zum Aufbauen und Betreiben einer mehrfachen Kommunikationsverbindung in einer drahtlosen Kommunikationsvorrichtung, die drahtlose Kommunikationsvorrichtung aufweisend: Einen ersten drahtlosen Transceiver und einen zweiten drahtlosen Transceiver. Das Verfahren aufweisend: Aufbauen einer ersten Kommunikationsverbindung gemäß einem IEEE 802.15.1 Standard mittels des ersten drahtlosen Transceivers. Aufbauen einer zweiten Kommunikationsverbindung gemäß einem IEEE 802.11 Standard mittels des zweiten drahtlosen Transceivers. Aufbauen einer dritten. Kommunikationsverbindung gemäß einem IEEE 802.15.1 Standard, mittels des ersten drahtlosen Transceivers, auf dem Kanal der zweiten Kommunikationsverbindung; und simultanes Betreiben der ersten Kommunikationsverbindung, der zweiten Kommunikationsverbindung und der dritten Kommunikationsverbindung, wobei die zweite Kommunikationsverbindung und die dritte Kommunikationsverbindung auf demselben Kanal betrieben werden.

Eine mehrfache Kommunikationsverbindung im Sinne der Erfindung kann dabei eine Bündelung von mindestens zwei Kommunikationsverbindungen meinen. Dabei können diese Kommunikationsverbindungen für den Nutzer als eine einzige Kommunikationsverbindung in Erscheinung treten. Vorzugsweise ist eine der Kommunikationsverbindungen eine WLAN-Verbindung und eine weitere der Kommunikationsverbindungen ist eine Bluetooth-Verbindung.

Eine drahtlose Kommunikationsvorrichtung im Sinne der Erfindung meint dabei eine Kommunikationsvorrichtung welche geeignet ist, mindestens eine drahtlose Kommunikationsverbindung zur Datenübertragung zu nutzen. Vorzugsweise kann mit einer drahtlosen Kommunikationsvorrichtung ein Pad, ein Smartphone, eine Smartwatch, eine Smart-Brille, eine Kraftfahrzeug-Kommunikationsvorrichtung und dergleichen gemeint sein.

Ein drahtloser Transceiver im Sinne der Erfindung meint dabei eine Vorrichtung, welche geeignet ist, drahtlos Daten zu senden und zu empfangen.

Ein simultanes Betreiben mehr als einer Kommunikationsverbindung setzt gewöhnlich voraus, dass jede der simultan betriebenen Kommunikationsverbindungen auf jeweils einem anderen Kanal betrieben wird, um zu vermeiden, dass die Kommunikationsverbindungen einander stören.

Durch die erfindungsgemäße Lehre wird der Vorteil erreicht, dass mehr als eine WLAN-Verbindung zeitgleich mit einer Bluetooth-Verbindung mittels lediglich zwei Transceivern betrieben werden kann. Dadurch kann eine höhere Gesamt-Datenübertragungsrate für eine drahtlose Kommunikationsvorrichtung ermöglicht werden, ohne dass ein weiterer kostentreibender Transceiver verbaut werden muss.

Der Gegenstand eines nebengeordneten Anspruches betrifft dabei eine drahtlose Kommunikationsvorrichtung, aufweisend einen ersten drahtlosen Transceiver und einen zweiten drahtlosen Transceiver, wobei die Kommunikationsvorrichtung dazu eingerichtet ist, das zuvor genannte erfindungsgemäße Verfahren oder ein darauf basierendes nachfolgendes exemplarisches Beispiel des erfindungsgemäßen Verfahrens auszuführen.

Durch die erfindungsgemäße Lehre wird der Vorteil erreicht, dass eine drahtlose Kommunikationsvorrichtung bereit gestellt werden kann, welche mittels zweier Transceiver eine höhere Gesamt-Datenübertragungsrate ermöglichen kann, als eine herkömmliche solche drahtlose Kommunikationsvorrichtung.

Ein weiterer Vorteil ist, dass dies erzielt werden kann, ohne die Produktionskosten der drahtlosen Kommunikationsvorrichtung signifikant zu erhöhen.

Der Gegenstand eines weiteren nebengeordneten Anspruches betrifft dabei ein Kraftfahrzeug, aufweisend
eine drahtlose Kommunikationsvorrichtung, wobei die drahtlose Kommunikationsvorrichtung dazu eingerichtet ist, das zuvor genannte erfindungsgemäße Verfahren oder ein darauf basierendes nachfolgendes exemplarisches Beispiel des erfindungsgemäßen Verfahrens auszuführen.

Ein Kraftfahrzeug kann dabei ein mittels eines Verbrennungsmotors und/oder mittels eines Elektromotors angetriebenes Fahrzeug sein, wie beispielsweise ein Motorrad, ein Personenkraftwagen, ein Bus oder ein Lastkraftwagen.

Durch die erfindungsgemäße Lehre wird der Vorteil erreicht, dass ein Kraftfahrzeug bereit gestellt werden kann, welches mit einer drahtlosen Kommunikationsvorrichtung, die lediglich zwei drahtlose Transceiver aufweist, eine höhere Gesamt-Datenübertragungsrate für das Kraftfahrzeug ermöglicht werden kann, als in einem herkömmlichen solchen Kraftfahrzeug.

Ein weiterer Vorteil ist, dass dies erzielt werden kann, ohne die Produktionskosten der drahtlosen Kommunikationsvorrichtung signifikant zu erhöhen.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mitumfasst, soweit der Kontext dies nicht explizit ausschließt.

Nachfolgend werden weitere exemplarische Ausgestaltungen des ersten erfindungsgemäßen Verfahrens erläutert.

Entsprechend einer ersten exemplarischen Ausgestaltung weist das Verfahren ferner auf, dass die erste Kommunikationsverbindung nach einem Standard gemäß Bluetooth 2.1 oder geringer betreibbar ist.

Diese Ausgestaltung weist den Vorteil auf, dass das Verfahren mit marktgängigen Kommunikationsvorrichtungen betreibbar ist, welche bereits zuverlässig funktionieren und somit Kosten gespart werden können. Ferner weist diese Ausgestaltung den Vorteil auf, dass bereits vorhandene Kommunikationsvorrichtungen kostengünstig nachrüstbar sind, um mit dem Verfahren betreibbar zu sein, indem die Hardware einer solchen Kommunikationsvorrichtung nicht modifiziert werden muss.

Entsprechend einer weiteren exemplarischen Ausgestaltung weist das Verfahren ferner auf, dass die dritte Kommunikationsverbindung nach einem Standard gemäß Bluetooth 3.0 oder höher betreibbar ist.

Diese Ausgestaltung weist den Vorteil auf, dass das Verfahren mit marktgängigen Kommunikationsvorrichtungen betreibbar ist und somit Kosten gespart werden können.

Ferner weist die Ausgestaltung den Vorteil auf, dass Kommunikationsvorrichtungen kostengünstig nachrüstbar sind, um mit dem Verfahren betreibbar zu sein, welche einen aktuellen oder künftigen Bluetooth-Standard unterstützen, indem die Hardware einer solchen Kommunikationsvorrichtung nicht modifiziert werden muss.

Entsprechend einer weiteren exemplarischen Ausgestaltung weist das Verfahren ferner auf, dass die dritte Kommunikationsverbindung auf einem zusätzlichen High-Speed Kanal auf Basis von WLAN betreibbar ist.

Somit kann die dritte Kommunikationsverbindung auf Basis von BT-WLAN betrieben werden.

Diese Ausgestaltung weist den Vorteil auf, dass das Verfahren mit marktgängigen Kommunikationsvorrichtungen mit hoher Datenübertragungsrate betreibbar ist und somit Kosten gespart werden können. Ferner weist diese Ausgestaltung den Vorteil auf, dass bereits vorhandene Kommunikationsvorrichtungen kostengünstig nachrüstbar sind, um mit dem Verfahren betreibbar zu sein, indem die Hardware einer solchen Kommunikationsvorrichtung nicht modifiziert werden muss.

Entsprechend einer weiteren exemplarischen Ausgestaltung weist das Verfahren ferner auf: Teilen der Übertragungskapazität des selben Kanales, auf welchem die zweite Kommunikationsverbindung und die dritte Kommunikationsverbindung simultan betrieben werden, in einen ersten Teilkanal mit einer ersten Teilkapazität und in einen zweiten Teilkanal mit einer zweiten Teilkapazität; zuweisen des ersten Teilkanales an die zweite Kommunikationsverbindung; und zuweisen des zweiten Teilkanales an die dritte Kommunikationsverbindung.

Ein Teilkanal im Sinne der Erfindung meint dabei einen Teil eines Kommunikationskanales, der gesondert genutzt werden kann, wodurch ein entsprechender Teil der gesamten Kanalkapazität für diesen Teilkanal nutzbar ist, vorzugsweise lediglich für diesen Teilkanal nutzbar ist. Insbesondere kann die Teilung der Kanalkapazität durch zeitliche Staffelung erfolgen.

Diese Ausgestaltung weist den Vorteil auf, dass es möglich wird, dass zwei Kommunikationsverbindungen welche das WLAN-Protokoll verwenden, sich einen einzigen Kanal teilen können ohne einander zu stören.

Entsprechend einer ersten exemplarischen Ausgestaltung weist die drahtlose Kommunikationsvorrichtung ferner auf, dass der erste drahtlose Transceiver dazu eingerichtet ist, gemäß einem IEEE 802.15.1 Standard betrieben zu werden.

Diese Ausgestaltung weist den Vorteil auf, dass die drahtlose Kommunikationsvorrichtung mit marktgängigen Transceivern betreibbar ist und somit Kosten gespart werden können.

Entsprechend einer weiteren exemplarischen Ausgestaltung weist die drahtlose Kommunikationsvorrichtung ferner auf, dass der erste drahtlose Transceiver dazu eingerichtet ist, gemäß Bluetooth 3.0 oder höher betrieben zu werden.

Diese Ausgestaltung weist den Vorteil auf, dass die drahtlose Kommunikationsvorrichtung mit marktgängigen und künftigen Kommunikationsvorrichtungen mit hoher Datenübertragungsrate betreibbar ist und somit Kosten gespart werden können.

Entsprechend einer weiteren exemplarischen Ausgestaltung weist die drahtlose Kommunikationsvorrichtung ferner auf, dass der zweite drahtlose Transceiver dazu eingerichtet ist, gemäß einem IEEE 802.11 Standard betrieben zu werden.

Diese Ausgestaltung weist den Vorteil auf, dass die drahtlose Kommunikationsvorrichtung mit marktgängigen und künftigen Kommunikationsvorrichtungen mit hoher Datenübertragungsrate betreibbar ist und somit Kosten gespart werden können.

Die Erfindung erlaubt es somit, mittels zweier drahtloser Transceiver drei drahtlose Kommunikationsverbindungen simultan zu betreiben, ohne dass sich die simultan betrieben drahtlosen Kommunikationsverbindungen gegenseitig stören, und somit die Gesamt-Datenübertragungsrate einer drahtlosen Kommunikationsvorrichtung, welche mit zwei solchen drahtlosen Transceivern ausgestattet ist, zu erhöhen.

Die Erfindung wird nachfolgend eingehender an Hand der Figuren erläutert werden. In diesen zeigen:
Fig. 1 ein schematisches Ablaufdiagramm eines vorgeschlagenen Verfahrens gemäß einer beispielhaften Ausgestaltung der Erfindung;
Fig. 2 ein schematisches Ablaufdiagramm eines vorgeschlagenen Verfahrens gemäß einer weiteren beispielhaften Ausgestaltung der Erfindung; und
Fig. 3 eine schematische Darstellung einer erfindungsgemäßen drahtlosen Kommunikationsvorrichtung.

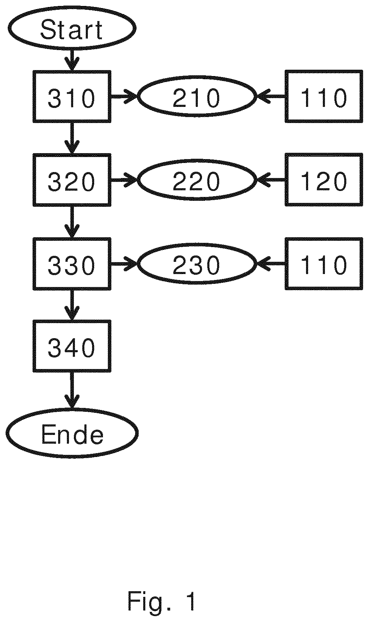

Fig. 1 zeigt ein schematisches Ablaufdiagramm eines vorgeschlagenen Verfahrens gemäß einer beispielhaften Ausgestaltung der Erfindung.

Dabei zeigt Fig. 1 ein Ablaufdiagramm eines Verfahrens zum Aufbauen und Betreiben einer mehrfachen Kommunikationsverbindung in einer drahtlosen Kommunikationsvorrichtung 100, die drahtlose Kommunikationsvorrichtung 100 aufweisend einen ersten drahtlosen Transceiver 110, und einen zweiten drahtlosen Transceiver 120, das Verfahren aufweisend: Aufbauen 310 einer ersten Kommunikationsverbindung 210 gemäß einem IEEE 802.15.1 Standard mittels des ersten drahtlosen Transceivers 110. Aufbauen 320 einer zweiten Kommunikationsverbindung 220 gemäß einem IEEE 802.11 Standard mittels des zweiten drahtlosen Transceivers 120. Aufbauen 330 einer dritten Kommunikationsverbindung 230 gemäß einem IEEE 802.15.1 Standard, mittels des ersten drahtlosen Transceivers 110, auf dem Kanal der zweiten Kommunikationsverbindung 220. Und simultanes Betreiben 340 der ersten Kommunikationsverbindung 210, der zweiten Kommunikationsverbindung 220 und der dritten Kommunikationsverbindung 230, wobei die zweite Kommunikationsverbindung 220 und die dritte Kommunikationsverbindung 230 auf demselben Kanal betrieben werden.

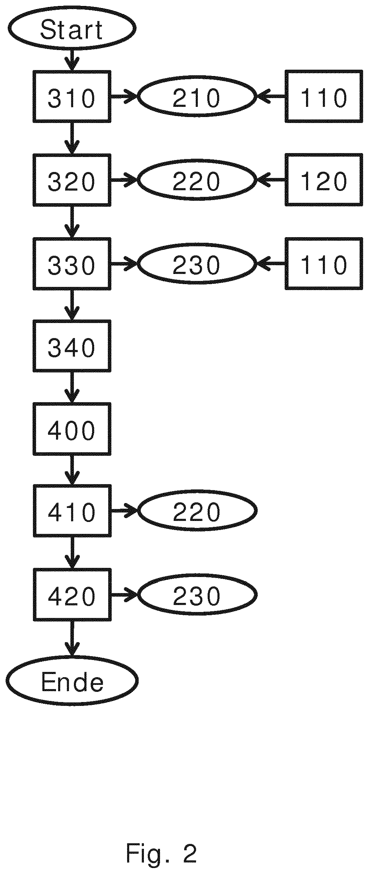

Fig. 2 zeigt ein schematisches Ablaufdiagramm eines vorgeschlagenen Verfahrens gemäß einer weiteren beispielhaften Ausgestaltung der Erfindung.

Dabei zeigt Fig. 2 ein Ablaufdiagramm eines gegenüber dem Verfahren aus Fig.1 erweiterten Verfahrens. Das zuvor zu Fig. 1 Gesagte gilt entsprechend für Fig. 2 fort.

Wie Fig. 2 entnommen werden kann, weist das Verfahren darüber hinaus auf Teilen 400 einer Übertragungskapazität desselben Kanales, auf welchem die zweite Kommunikationsverbindung 220 und die dritte Kommunikationsverbindung 230 simultan betrieben werden, in einen ersten Teilkanal mit einer ersten Teilkapazität und in einen zweiten Teilkanal mit einer zweiten Teilkapazität. Zuweisen 410 des ersten Teilkanales an die zweite Kommunikationsverbindung 220. Und zuweisen 420 des zweiten Teilkanales an die dritte Kommunikationsverbindung 230.

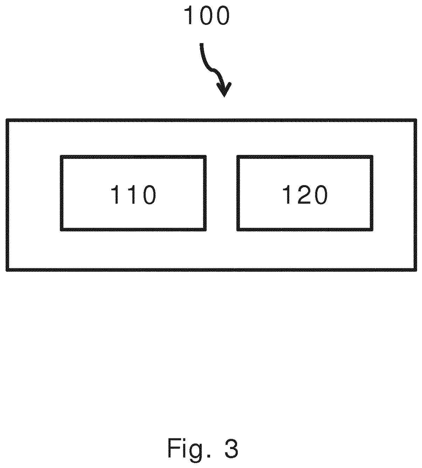

Fig. 3 zeigt eine schematische Darstellung einer erfindungsgemäßen drahtlosen Kommunikationsvorrichtung.

Dabei zeigt Fig. 3 eine drahtlose Kommunikationsvorrichtung 100, aufweisend einen ersten drahtlosen Transceiver 110 und einen zweiten drahtlosen Transceiver 120. Dabei ist die Kommunikationsvorrichtung 100 dazu eingerichtet, irgendein erfindungsgemäßes Verfahren auszuführen. Dabei ist der erste drahtlose Transceiver 110 dazu eingerichtet, gemäß einem IEEE 802.15.1 Standard und gemäß Bluetooth 3.0 oder höher betrieben zu werden. Der zweite drahtlose Transceiver 120 ist dazu eingerichtet, gemäß einem IEEE 802.11 Standard betrieben zu werden.

Die Erfindungsidee kann wie folgt zusammengefasst werden. Es wird ein Verfahren und eine diesbezügliche Vorrichtung bereitgestellt, wodurch es möglich werden kann, dass eine Vorrichtung, welche zwei drahtlose Transceiver aufweist, wovon einer gemäß einem IEEE 802.11 Standard betreibbar und ein weiterer gemäß einem IEEE 802.15.1 Standard und gemäß Bluetooth 3.0 oder höher betreibbar ist, zeitgleich eine Bluetooth Verbindung und zwei WLAN Verbindungen aufbauen und aufrechterhalten kann, wodurch höhere Datentransferraten für die Vorrichtung ermöglicht werden können.

### Bezugszeichenliste

- 100: drahtlose Kommunikationsvorrichtung
- 110: erster drahtloser Transceiver
- 120: zweiter drahtloser Transceiver
- 210: erste Kommunikationsverbindung
- 220: zweite Kommunikationsverbindung
- 230: dritte Kommunikationsverbindung
- 310: Aufbauen einer ersten Kommunikationsverbindung
- 320: Aufbauen einer zweiten Kommunikationsverbindung
- 330: Aufbauen einer dritten Kommunikationsverbindung
- 340: Simultanes Betreiben der ersten Kommunikationsverbindung, der zweiten Kommunikationsverbindung und der dritten Kommunikationsverbindung
- 400: Teilen einer Übertragungskapazität
- 410: Zuweisen des ersten Teilkanales an die zweite Kommunikationsverbindung
- 420: Zuweisen des zweiten Teilkanales an die dritte Kommunikationsverbindung

## Patentansprüche

1. Ein Verfahren zum Aufbauen und Betreiben einer mehrfachen Kommunikationsverbindung in einer drahtlosen Kommunikationsvorrichtung (100), die drahtlose Kommunikationsvorrichtung (100) aufweisend einen ersten drahtlosen Transceiver (110), und
einen zweiten drahtlosen Transceiver (120),
das Verfahren aufweisend:
- Aufbauen (310) einer ersten Kommunikationsverbindung (210) auf einem Kanal gemäß einem IEEE 802.15.1 Standard mittels des ersten drahtlosen Transceivers (110),
- Aufbauen (320) einer zweiten Kommunikationsverbindung (220) auf einem Kanal gemäß einem IEEE 802.11 Standard mittels des zweiten drahtlosen Transceivers (120),
**dadurch gekennzeichnet, dass** das Verfahren ferner aufweist:
- Aufbauen (330) einer dritten Kommunikationsverbindung (230) gemäß einem IEEE 802.15.1 Standard, mittels des ersten drahtlosen Transceivers (110), auf dem Kanal der zweiten Kommunikationsverbindung (220), und
- Simultanes Betreiben (340) der ersten Kommunikationsverbindung (210), der zweiten Kommunikationsverbindung (220) und der dritten Kommunikationsverbindung (230), wobei die zweite Kommunikationsverbindung (220) und die dritte Kommunikationsverbindung (230) auf demselben Kanal betrieben werden.

2. Das Verfahren gemäß Anspruch 1, wobei die erste Kommunikationsverbindung (210) nach einem Standard gemäß Bluetooth 2.1 oder geringer betreibbar ist.

3. Das Verfahren gemäß Anspruch 1 oder 2, wobei die dritte Kommunikationsverbindung (230) nach einem Standard gemäß Bluetooth 3.0 oder höher betreibbar ist.

4. Das Verfahren gemäß Anspruch 3, wobei die dritte Kommunikationsverbindung (230) auf einem zusätzlichen High-Speed Kanal auf Basis von WLAN betreibbar ist.

5. Das Verfahren gemäß irgendeinem der vorhergehenden Ansprüche, das Verfahren darüberhinaus aufweisend:
- Teilen (400) einer Übertragungskapazität desselben Kanales, auf welchem die zweite Kommunikationsverbindung (220) und die dritte Kommunikationsverbindung (230) simultan betrieben werden, in einen ersten Teilkanal mit einer ersten Teilkapazität und in einen zweiten Teilkanal mit einer zweiten Teilkapazität,
- Zuweisen (410) des ersten Teilkanales an die zweite Kommunikationsverbindung (220), und
- Zuweisen (420) des zweiten Teilkanales an die dritte Kommunikationsverbindung (230).

6. Eine drahtlose Kommunikationsvorrichtung (100), aufweisend
einen ersten drahtlosen Transceiver (110), und einen zweiten drahtlosen Transceiver (120), wobei die Kommunikationsvorrichtung (100) dazu eingerichtet ist, das Verfahren gemäß irgendeinem der Ansprüche 1 bis 5 auszuführen.

7. Die drahtlose Kommunikationsvorrichtung (100) gemäß Anspruch 6, wobei
der erste drahtlose Transceiver (110) dazu eingerichtet ist, gemäß einem IEEE 802.15.1 Standard betrieben zu werden.

8. Die drahtlose Kommunikationsvorrichtung (100) gemäß Anspruch 7, wobei
der erste drahtlose Transceiver (110) dazu eingerichtet ist, gemäß Bluetooth 3.0 oder höher betrieben zu werden.

9. Die drahtlose Kommunikationsvorrichtung (100) gemäß irgendeinem der Ansprüche 6 bis 8, wobei der zweite drahtlose Transceiver (120) dazu eingerichtet ist, gemäß einem IEEE 802.11 Standard betrieben zu werden.

10. Verwendung einer drahtlosen Kommunikationsvorrichtung (100) gemäß irgendeinem der Ansprüche 6 bis 9 in einem Kraftfahrzeug.

## Claims

1. A method for setting up and operating a multiple communication link in a wireless communication apparatus (100), the wireless communication device (100) comprising a first wireless transceiver (110), and a second wireless transceiver (120), the method comprising the steps of:
- setting up (310) a first communication link (210) on a channel in accordance with an IEEE 802.15.1 standard by means of the first wireless transceiver (110),
- setting up (320) a second communication link (220) on a channel in accordance with an IEEE 802.11 standard by means of the second wireless transceiver (120),
**characterised in that** the method also comprises:
- setting up (330) a third communication link (230) in accordance with an IEEE 802.15.1 standard, by means of the first wireless transceiver (110), on the channel of the second communication link (220), and
- simultaneously operating (340) the first communication link (210), the second communication link (220), and the third communication link (230), wherein the second communication link (220) and the third communication link (230) are operated on the same channel.

2. A method according to claim 1, wherein the first communication link (210) can be operated in accordance with a standard according to Bluetooth 2.1 or lower.

3. A method according to claim 1 or 2, wherein the third communication link (230) can be operated in accordance with a standard according to Bluetooth 3.0 or higher.

4. A method according to claim 3, wherein the third communication link (230) can be operated on an additional high-speed channel on the basis of WLAN.

5. A method according to any one of the preceding claims, the method additionally comprising the steps of:
- dividing (400) a transmission capacity of the same channel, on which the second communication link (220) and the third communication link (230) are operated simultaneously, into a first sub-channel having a first sub-capacity, and into a second sub-channel having a second sub-capacity,
- assigning (410) the first sub-channel to the second communication link (220), and
- assigning (420) the second sub-channel to the third communication link (230).

6. A wireless communication device (100), comprising a first wireless transceiver (110), and a second wireless transceiver (120), wherein the communication device (100) is designed to perform the method according to any one of claims 1 to 5.

7. A wireless communication device (100) according to claim 6, wherein the first wireless transceiver (110) is designed to be operated in accordance with an IE E E 802.15.1 standard.

8. A wireless communication device (100) according to claim 7, wherein the first wireless transceiver (110) is designed to be operated in accordance with Bluetooth 3.0 or higher.

9. A wireless communication device (100) according to any one of claims 6 to 8, wherein the second wireless transceiver (120) is designed to be operated in accordance with an IEEE 802.11 standard.

10. Use of a wireless communication device (100) according to any one of claims 6 to 9 in a motor vehicle.

## Revendications

1. Procédé permettant l'établissement et la gestion d'une liaison de communication multiple dans un dispositif de communication sans fil (100), le dispositif de communication sans fil (100) comprenant un premier émetteur récepteur sans fil (110), et un second émetteur récepteur sans fil (120), ce procédé comprenant des étapes consistant à :
- établir (310) une premier liaison de communication (210) sur un canal selon le standard IEEE 802.15.1 au moyen du premier émetteur-récepteur sans fil (110),
- établir (320) une seconde liaison de communication (220) sur un canal selon le standard IEEE 802.11 au moyen du second émetteur récepteur sans fil (120),
**caractérisé en ce que**
le procédé comprend en outre des étapes consistant à :
- établir (330) une troisième liaison de communication (230) selon le standard IEEE 802.15.1 au moyen du premier émetteur récepteur sans fil (110) sur le canal de la seconde liaison de communication (220), et
- faire fonctionner simultanément (340) la première liaison de communication (210), la seconde liaison de communication (220) et la troisième liaison de communication (230), la seconde liaison de communication (220) et la troisième liaison de communication (230) étant effectuées sur le même canal.

2. Procédé conforme à la revendication 1,
selon lequel la première liaison de communication (210) peut fonctionner selon le standard Bluetooth 2.1 ou un standard inférieur.

3. Procédé conforme à la revendication 1 ou 2,
selon lequel la troisième liaison de communication (230) peut fonctionner selon le standard Bluetooth 3.0 ou un standard supérieur.

4. Procédé conforme à la revendication 3,
selon lequel la troisième liaison de communication (230) peut fonctionner sur un canal haut débit supplémentaire basé sur WLAN.

5. Procédé conforme à l'une quelconque des revendications précédentes, comprenant en outre des étapes consistant à :
subdiviser (400) la capacité de transmission du canal sur lequel fonctionne de façon simultanée la seconde liaison de communication (220) et la troisième liaison de communication (230) en un premier canal partiel ayant une première capacité partielle et un second canal partiel ayant une seconde capacité partielle,
- attribuer (410) le premier canal partiel à la seconde liaison de communication (220), et
- attribuer (420) le second canal partiel à la troisième liaison de communication (230).

6. Dispositif de communication sans fil (100) comprenant :
un premier émetteur récepteur sans fil (110) et un second émetteur récepteur sans fil (120),
le dispositif de communication (100) étant réalisé pour permettre la mise en oeuvre du procédé conforme à l'une quelconque des revendications 1 à 5.

7. Dispositif de communication sans fil (100) conforme à la revendication 6, dans lequel :
le premier émetteur récepteur sans fil (110) est susceptible de fonctionner selon le standard IEEE 802.15.1.

8. Dispositif de communication sans fil (100) conforme à la revendication 7, dans lequel :
le premier émetteur récepteur sans fil (110) est susceptible de fonctionner selon le standard Bluetooth 3.0 ou un standard supérieur.

9. Dispositif de communication sans fil (100) conforme à l'une quelconque des revendications 6 à 8, dans lequel le second émetteur-récepteur sans fil (120) est susceptible de fonctionner selon le standard IEEE 802.11.

10. Utilisation d'un dispositif de communication sans fil (100) conforme à l'une quelconque des revendications 6 à 9, dans un véhicule automobile.
